# FASCICULE DE BREVET EUROPEEN

(11) **EP 3 555 465 B1**
(45) Date de publication et mention de la délivrance du brevet: **23.09.2020**
(21) Numéro de dépôt: 17825168.2
(22) Date de dépôt: 13.12.2017
(51) Int. Cl.: F03D 80/40

(54) **PROCEDE DE DETECTION DE GIVRAGE ET DE DEGIVRAGE**
VERFAHREN ZUR ERKENNUNG VON VEREISUNG UND ENTEISUNG
METHOD FOR DETECTING ICING AND DE-ICING

(30) Priorité: 13.12.2016 FR 1662353
(43) Date de publication de la demande: 23.10.2019
(73) Titulaire: Electricité de France, 75008 Paris (FR); Centre National de la Recherche Scientifique (CNRS), 75016 Paris (FR); Ecole Normale Supérieure de Cachan, 94230 Cachan (FR)
(72) Inventeur: TAILLADE, Frédéric, 92140 Clamart (FR); DAOUT, Franck, 92800 Puteaux (FR); SCHMITT, Françoise, 75018 Paris (FR)
(74) Mandataire: Regimbeau
(86) Numéro de dépôt international: PCT/EP2017/082647
(87) Numéro de publication internationale: WO 2018/109016

(56) Documents cités:
- EP-A1- 2 635 808
- WO-A1-2013/149811
- US-A1- 2012 207 589
- US-A1- 2013 323 057

## Description

### DOMAINE TECHNIQUE

L'invention porte sur la détection de givrage et dégivrage de structures.

L'invention vise plus spécifiquement à proposer un dispositif de détection de givrage et dégivrage d'une pale d'éolienne, et un procédé de mise en oeuvre de celui-ci.

### ETAT DE LA TECHNIQUE

L'implantation d'éoliennes en zones climatiques froides génère des contraintes majeures, notamment une fréquence importante d'épisodes de givrage des machines.

Le givre influe sur un grand nombre de paramètres de la machine :
- Blocage des instruments de mesure,
- Modification du profil des pales impliquant la baisse des performances et des vibrations impactant la structure, et
- Possibilité de décollement et de projection du givre.

La prise en compte de ces phénomènes implique l'arrêt complet de la machine lors des périodes à risques, ce qui engendre des pertes de production.
Afin de limiter les périodes d'arrêt, des moyens efficaces de protection via la suppression du givre accumulé, ou même via la limitation des possibilités de formation du givre par l'utilisation de revêtements *ad hoc,* sont mis en oeuvre.
La détection de l'apparition et de la disparition du givre est aussi une voie prometteuse pour protéger les machines et limiter les arrêts.

Plusieurs méthodes sont connues pour détecter le givre. Elles peuvent être classées en deux grandes familles selon qu'elles détectent la formation du givre sur les éoliennes (pale ou nacelle) de manière directe (grâce à un capteur dédié) ou de manière indirecte (grâce à l'analyse et la mise en cohérence d'informations prises sur les paramètres d'exploitation de l'éolienne comme la puissance produite, la température, l'humidité, la vitesse du vent, etc.).
La méthode indirecte demande une analyse fine, souvent par le biais de modèles, ce qui reste difficile à mettre en oeuvre par les exploitants, et manque de fiabilité.
La mesure directe semble préférable mais les capteurs ne font pas toujours la mesure directement sur la pale ; à cause de leur encombrement, ils sont souvent disposés au niveau d'un mât météorologique à proximité du champ d'éolienne ou sur la nacelle des éoliennes.

Le principe des capteurs de détection directe du givre met en oeuvre différentes techniques de mesure selon la nature de la grandeur physique estimée : mécanique, électrique/électromagnétique, ou optique.

On connaît du document FR 2650667 un dispositif de détection de givrage et de dégivrage de pales aéronautiques comprenant un ensemble de circuits résonnants (type LC), placés sur lesdites pales, et un système interrogateur à distance. Les circuits décrits sont configurés pour résonner à la fois à une fréquence fondamentale, et à une fréquence double de cette fréquence fondamentale. Le système interrogateur est équipé d'un doubleur de fréquence pour émettre en même temps à des fréquences données et à des fréquences doubles de celles-ci. Les circuits sont ainsi éclairés par un ensemble de paires de fréquences incidentes (fondamentales et doubles de fondamentales). Fréquence et facteur de qualité de la réponse des circuits sont mesurés en retour et, de là, est déduit l'état de givre ou de dégivre de la pale. Doter l'interrogateur d'un doubleur de fréquence, et configurer les circuits pour résonner à leur fréquence fondamentale et au double de celles-ci, permet de distinguer les réponses des circuits résonnants des signaux réfléchis sur les pales.

On connaît par ailleurs du document US 2013/0323057 un dispositif de détection de givrage de pale d'éolienne comprenant un transpondeur fixé sur la pale et une unité interrogatrice dudit transpondeur. L'unité interrogatrice éclaire à distance le transpondeur à des niveaux de puissance de plus en plus importants, jusqu'à recevoir de celui-ci une réponse fiable. Le dispositif comprend en outre un comparateur qui reçoit le niveau de puissance émis pour lequel une réponse fiable a été reçue, et la compare à une valeur de puissance seuil programmable. Le résultat de cette comparaison indique si la pale est givrée ou non.

L'utilisation d'étiquette électromagnétique (ou TAG), type transpondeur, comme capteur est déjà connue de la littérature.
Ainsi, Hirsh [1] décrit un capteur de corrosion pour réservoir de stockage industriel comprenant une étiquette électromagnétique. L'étiquette comprend, en série, une antenne réceptrice, un élément chimique sensible à la corrosion, une jonction non linéaire, et une antenne émettrice. L'ensemble constitue un circuit électrique dont l'impédance est modifiée par l'état chimique de l'élément sensible à la corrosion. Dans la mesure où, lorsque l'étiquette est éclairée par une onde incidente, elle réémet un signal différent suivant l'état d'impédance du circuit, il suffit d'analyser la réponse, à un éclairage donné, de l'étiquette au cours du temps, pour connaître le niveau de corrosion du réservoir.
De même, Romeu Gomez [2] enseigne l'utilisation d'une étiquette électromagnétique comme capteur de température. L'étiquette comprend, en série, une antenne réceptrice, un élément filtrant en fréquence sensible à la température, un doubleur de fréquence, et une antenne émettrice. Pour un éclairage donné de l'antenne réceptrice de l'étiquette, une réponse différente est émise par l'antenne émettrice, suivant la température du système.

L'utilisation d'étiquette électromagnétique, type TAG, comme capteur est donc bien connu, y compris dans le domaine du givrage de pale d'éolienne. Cependant, tous ces capteurs comprennent nécessairement l'ajout d'un élément intermédiaire, sensible à la grandeur physique que l'on souhaite mesurer, qui influe sur la réponse de l'étiquette.

Il apparaît donc le besoin de capteurs passifs, type étiquette électromagnétique, qui détectent à la fois le givrage et le dégivrage, tout en étant intégrés à un dispositif présentant une structure plus simple que celle de l'art antérieur. En permettant la détection de la phase de dégivrage, ces capteurs permettent de redémarrer au plus tôt la production.

### BASE DE L'INVENTION

La présente invention a pour objet un dispositif de détection de givrage et de dégivrage d'une pale d'éolienne caractérisé en ce qu'il comprend :
- d'une part un capteur, placé à la surface d'une pale, et comprenant :
   ∘ une première antenne, dite « réceptrice »,
   ∘ une seconde antenne, dite « émettrice »,
   ∘ un dispositif doubleur de fréquence, intercalé entre lesdites première et seconde antennes, et
- d'autre part un interrogateur, configuré pour émettre une onde électromagnétique en direction de l'antenne réceptrice dudit capteur, et recevoir une onde électromagnétique en provenance de l'antenne émettrice dudit capteur,

Avantageusement, mais facultativement, le dispositif selon l'invention peut en outre comprendre l'une des caractéristiques suivantes :
- l'interrogateur comprend une antenne émettrice et une antenne réceptrice,
- les antennes de l'interrogateur émettent et reçoivent des ondes polarisées, de préférence dont la polarisation est croisée,
- les antennes du capteur émettent et reçoivent des ondes polarisées, dont les polarisations correspondent aux polarisations respectives des antennes de l'interrogateur,
- l'interrogateur comprend en outre un synthétiseur alimentant une antenne émettrice de l'interrogateur, et un analyseur configuré pour analyser la puissance reçue en provenance d'une antenne émettrice du capteur,
- l'interrogateur est alimenté en énergie électrique,
- les antennes du capteur sont des antennes patch,
- la fréquence de résonance de l'antenne réceptrice du capteur, est voisine de 2,5 GHz,
- le doubleur de fréquence comprend une jonction non linéaire jouant le rôle de doubleur, la jonction non linéaire étant de préférence une diode type Schottky, et
- le capteur est composé d'un réseau d'antennes afin d'améliorer le rapport signal sur bruit au sein du dispositif

La présente invention a en outre pour objet un procédé de mise en oeuvre du dispositif précédemment décrit, comprenant les étapes consistant à :
- éclairer le capteur à une fréquence fixe, correspondant à la fréquence de résonance de l'antenne réceptrice lorsque le capteur est en contact avec de l'air,
- mesurer la puissance reçue, en provenance de l'antenne émettrice du capteur, à la fréquence égale à deux fois la fréquence d'éclairage, et
- en fonction d'un seuil de puissance reçue, faire remonter des alertes à un système de contrôle de l'éolienne

Avantageusement, mais facultativement, le procédé selon l'invention peut en outre comprendre les caractéristiques suivantes :
- le seuil de puissance reçue comprend trois niveaux distincts (S0, S1, S2) qui dépendent du paramétrage préalable du dispositif,
- si :
   ∘ Le niveau de puissance reçu est compris entre S1 et S0 (S1 < S0), alors la pale n'étant pas considérée comme givrée, aucune alerte n'est remontée au système de contrôle de l'éolienne,
   ∘ Le niveau de puissance reçu est compris entre S2 et S1 (S2 < S1), alors la pale étant considérée comme givrée, une alerte de givrage est remontée au système de contrôle de l'éolienne, et
   ∘ Le niveau de puissance reçu est inférieur à S2, alors la pale étant considérée comme recouverte d'eau, une alerte de dégivrage est remontée au système de contrôle de l'éolienne.
- on interroge de manière simultanée plusieurs capteurs disposés le long d'une pale.

La solution proposée de dispositif de détection de givrage et de dégivrage permet d'améliorer le rapport signal sur bruit (le bruit provenant d'échos parasites de l'environnement) de la chaine électronique d'interrogation au moyen d'un dispositif doubleur de fréquence directement intégré au capteur.

L'utilisation d'un dispositif selon l'invention présente en outre l'avantage de proposer un dispositif de détection à bas coût.

De plus, la taille et l'épaisseur d'éléments de type TAG sont réduites, ce qui permet une intégration directement sur la pale par collage, sans *a priori* impacter le profil de la pale, et notamment sa trainée.

Par ailleurs, la possibilité de faire fonctionner l'interrogateur par intermittence permet de réduire l'impact électromagnétique du dispositif sur l'environnement, tout en économisant de l'énergie.

Le dispositif selon l'invention présente en outre l'avantage de ne nécessiter aucun traitement de l'information échangée, puisque la mesure de givrage et de dégivrage se base sur un seuil de puissance reçue par l'interrogateur. De plus, le capteur de givre selon l'invention fonctionne sur la base d'une mesure de permittivité électrique Ainsi, la mesure de puissance reçue n'est pas influencée par la température ambiante.

Un autre avantage de l'invention est de limiter le risque de foudroiement du dispositif, le TAG étant passif. En tout état de cause, la perte du TAG (perte du signal) n'entraîne pas de fausse alarme.

Enfin, la possibilité d'interroger de manière simultanée plusieurs TAG disposés le long d'une pale, sans complexifier l'interprétation des résultats de mesure, permet de minimiser les opérations de remplacement.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- La figure 1 représente un dispositif de TAG RFID connu de l'art antérieur,
- La figure 2 représente un capteur de givrage et dégivrage selon l'invention, et
- La figure 3 représente un schéma complet du dispositif de détection de givrage et de dégivrage selon l'invention.

### DESCRIPTION DETAILLEE DE L'INVENTION

On va maintenant décrire un dispositif de détection de givrage et de dégivrage conforme à un mode de réalisation de l'invention.

Le dispositif comprend deux éléments distincts configurés pour dialoguer entre eux par liaison électromagnétique :
- un capteur de givre 6 passif interrogeable à distance, qui peut être collé sur une pale d'une éolienne dont on souhaite contrôler les périodes de givrage et de dégivrage, et
- un interrogateur 8, alimenté en énergie, et dont les antennes 9, 10 sont positionnées sur le moyeu de l'éolienne, en face de chaque pale instrumentée.

On va décrire plus en détails les différents composants du dispositif.

### Capteur de givre

Le principe du capteur de givre 6 repose sur un TAG, ou étiquette électromagnétique, avec la particularité de fonctionner à longue distance (50 - 100m entre le TAG et l'interrogateur). On connaît déjà des TAG de type « RFID » (Radio Frequency Identification) utilisé classiquement pour sécuriser des objets, fonctionnant à courte distance (quelques centimètres entre le TAG RFID et l'interrogateur). De tels dispositifs émettent et reçoivent des informations à la même fréquence, et disposent d'un processeur interne, autoalimenté par l'énergie électromagnétique reçu, permettant de traiter l'information échangé.

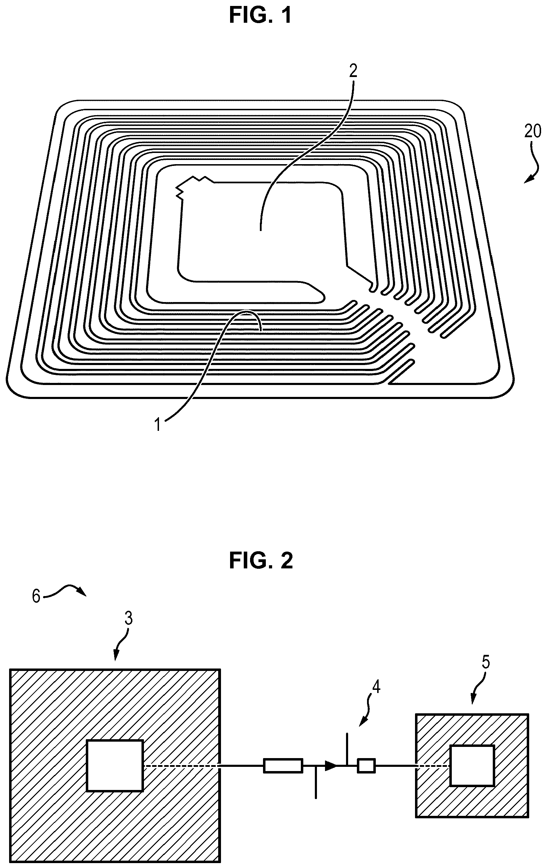

En référence à la figure 1, un TAG RFID 20 est usuellement composé d'une antenne 1 jouant le rôle d'antenne émettrice / réceptrice de signaux électromagnétiques, et d'une puce 2 codant l'information renvoyée.

Le TAG 6 du dispositif 7 de détection du givrage et dégivrage selon l'invention, repose sur l'utilisation de l'antenne d'émission / réception en tant que capteur de givre.

En effet, chaque matériau peut être caractérisé par une grandeur électromagnétique, notamment la permittivité diélectrique relative qui vaut 1 pour l'air, 80 pour l'eau pure et 5 pour la glace dans, une plage de fréquence comprise entre 100kHz et 10GHz. La réponse de l'antenne dépend donc du matériau à son contact. Selon la méthode d'interrogation du TAG, et l'analyse des signaux qui en est faite, la présence d'un matériau sur l'antenne peut être détectée en analysant la modification de la fréquence de résonance de l'antenne, son impédance électrique, etc.

En référence à la figure 2, le TAG 6 selon l'invention comprend une antenne réceptrice 3, de fréquence F0, un doubleur de fréquence 4, et une antenne émettrice 5 de fréquence double, F1. Il est de plus réalisable sur un seul support, typiquement un circuit imprimé d'épaisseur de 1,6 mm , ou typiquement comprise dans une plage de 0,8 mm à 3,2 mm.

Chaque antenne 3, 5 se présente sous forme de patch. Par antenne patch, on comprend ici une antenne plane dont l'élément rayonnant est une surface conductrice, avantageusement carrée, séparée d'un plan réflecteur conducteur par une lame diélectrique.

Les fréquences de résonnances et les puissances émises par les antennes 3,5 dépendent de la géométrie de la structure dont on étudie le givrage et le dégivrage, et du substrat dans lequel lesdites antennes 3, 5 sont formées. Avantageusement, mais non limitativement, la fréquence de résonance de l'antenne réceptrice 3 est voisine de 2,5 GHz, et celle de l'antenne émettrice 5 est voisine de 5 GHz. Par « voisin », on comprend que la valeur réelle des fréquences de résonance des antennes est comprise dans une plage de plus ou moins 2%, autour des valeurs de référence. Ces fréquences correspondent en effet à une bande ISM libre de droit et les puissances émises ne dépassent pas celle d'une « box » (20dBm). Les antennes 3, 5 permettent la communication avec l'interrogateur 8 et jouent le rôle de capteur de givre sur la base d'une mesure de permittivité électrique.

Le TAG passif 6 utilise un doubleur de fréquence 4, intercalé entre l'antenne réceptrice 3 et l'antenne émettrice 5, qui permet de discriminer les échos de l'environnement (pale, mât, etc.), et qui permet d'en minimiser le bruit provenant d'échos parasites de l'environnement. Le doubleur de fréquence 4 étant intercalé entre l'antenne réceptrice 3 et l'antenne émettrice 5, un signal électrique circulant de l'antenne réceptrice 3 vers l'antenne émettrice 5 traverse donc systématiquement le doubleur de fréquence 4. Le doubleur de fréquence 4 est constitué de modules d'adaptation et d'une jonction non linéaire jouant le rôle de doubleur, selon des caractéristiques connues en soit. Avantageusement, mais non limitativement, la jonction non-linéaire peut être une diode type Schottky (Zero Bias Schottky Detector Diodes - HSMS 2850 Avago). La diode est alors adaptée en impédance aux antennes par le biais de pistes électroniques de différentes largeurs, longueurs et nature.

Bien que le capteur TAG 6 décrit ci-dessus soit constitué de deux antennes patchs 3, 5, il est également possible d'avoir recours à un réseau d'antennes patchs afin d'adapter la directivité des antennes et ainsi d'améliorer le rapport signal sur bruit, provenant d'échos parasites de l'environnement, de la chaine de mesure. Dans ce cas, le capteur 6 comprend un ensemble donné de N0 antennes patch émettrices 5 et de N1 antennes patch réceptrices 3 (N0 et N1 > 2), et un doubleur de fréquence intercalé entre antennes réceptrices et antennes émettrices. Le réseau ainsi constitué est placé sur une pale d'éolienne selon des configurations variables, suivant les contraintes propres à l'installation considérée.

Ce mode de réalisation permet l'intégration des antennes 9, 10 de l'interrogateur 8 sur le moyeu de l'éolienne. Ce réseau d'antennes est alors configuré pour adapter le diagramme de rayonnement des antennes et améliorer ainsi le rapport signal sur bruit et donc la portée d'échange entre capteur 6 et interrogateur.

### Interrogateur

L'interrogateur 8 repose sur le principe d'un RADAR harmonique.

Il est composé d'un synthétiseur 11 alimentant une antenne 9 émettant une onde à la fréquence de résonance F0 de l'antenne réceptrice 3 du capteur 6, et d'une antenne réceptrice 10 reliée à un récepteur 12 réglé pour analyser la puissance reçue Pe" en provenance de l'antenne émettrice 5 du capteur 6, à la fréquence F1 de l'antenne émettrice 5 du capteur 6. Pour améliorer le rapport signal sur bruit, lesdites antennes 9, 10 de l'interrogateur 8 émettent et reçoivent des ondes polarisées. Les polarisations des antennes 9, 10 de l'interrogateur 8 sont croisées afin de minimiser le couplage entre les antennes émettrice 9 et réceptrice 10. Les polarisations des antennes 3, 5 du TAG 6 sont elles aussi croisées pour correspondre aux polarisations respectives des antennes 9, 10 de l'interrogateur.

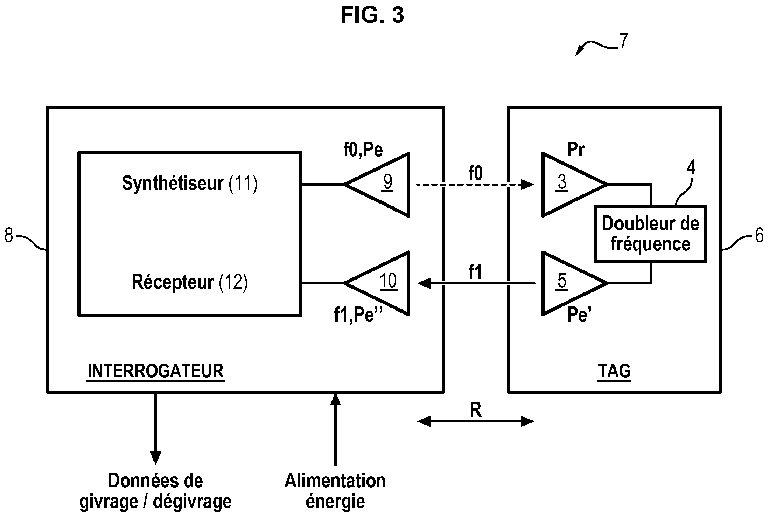

Le système complet (interrogateur 8 et TAG 6) est schématisé sur la figure 3. On y aperçoit l'interrogateur 8, alimenté en énergie, émettant à une fréquence F0 pour une puissance émise Pe en direction du TAG 6, situé à une distance R. Pour une distance donnée, le TAG 6 reçoit F0 à une puissance reçue Pr (Pr ≤ Pe, en fonction du matériau dont est recouverte l'antenne réceptrice 3 du TAG 6), double la fréquence en F1, et réémet un signal à la puissance Pe' (Pe' ≤ Pr, en fonction du matériau dont est recouverte l'antenne émettrice 5 du TAG 6).
L'onde reçue par l'interrogateur à F1 et Pe" (Pe"<Pe' en tenant compte de l'atténuation sur le trajet retour) est analysée et des données relatives au givrage et au dégivrage sont extraites.

### Procédé de détection du givrage et du dégivrage

Le procédé de détection du givrage et du dégivrage selon l'invention va maintenant être décrit. Ce procédé peut notamment mettre en oeuvre un dispositif 7 selon l'invention, tel que celui décrit précédemment.

Dans un premier temps, le comportement physique du capteur de givre 6, lors de période de givrage et de dégivrage, est décrit.

Au contact de l'air, la réponse de l'antenne réceptrice 3 présente une résonance donnée F0. Lorsqu'une couche significative d'eau recouvre l'antenne 3, il n'y a plus de résonance mesurable. Lorsque de la glace se forme au contact de l'antenne 3, la résonance est décalée vers les basses fréquences. De plus, le décalage de fréquence dépend de l'épaisseur de glace, et il est peu dépendant de la température de l'antenne.

La réponse du doubleur de fréquence 4 est peu impactée par le matériau à son contact.

Pour détecter la présence de glace sur le TAG 6, il est donc nécessaire de mesurer l'effet du décalage vers les basses fréquences décrit ci-dessus.

La solution la plus naturelle serait de balayer en fréquence puis de repérer le minimum de fréquence de résonnance, afin d'en déduire le matériau au contact du TAG 6. Cette solution nécessite de développer un interrogateur ayant la capacité de faire du balayage en fréquence, ce qui est coûteux.

Le procédé selon l'invention propose donc d'éclairer le TAG 6 à une fréquence fixe F0, celle de l'antenne réceptrice 3, et de mesurer la puissance émise à la fréquence F1 de l'antenne émettrice 5. Le principe de l'étape d'interrogation selon l'invention consiste alors à mesurer l'atténuation du signal émis à la fréquence F1 de l'antenne émettrice 5 en fonction du matériau au contact du TAG 6.

Ce procédé s'appuie sur le principe du radar harmonique. Il est plus simple à réaliser sur le plan technologique et présente l'avantage d'avoir une grande dynamique de détection puisqu'il se focalise sur des fréquences bien précises.

Le fonctionnement du dispositif selon l'invention est le suivant :
- En présence d'air sur le capteur 6, la puissance mesurée Pe" par l'interrogateur 8 est maximum S0 (S0 légèrement inférieur la puissance émise Pe, du fait de la propagation du signal électromagnétique).
- En présence de glace sur le capteur 6, la puissance mesurée Pe" par l'interrogateur 8 est diminuée puisque la fréquence de résonance de des antennes réceptrice 3 et émettrices 5 du TAG 6 est désadaptée par rapport à la fréquence d'émission F0 de l'interrogateur 8 et la fréquence d'émission F1 de l'antenne émettrice 5 du TAG 6 (typiquement, la diminution de puissance mesurée est d'environ 10 à 20 dB pour l'onde reçue par l'antenne réceptrice 3). En fonction du paramétrage préalable du dispositif 7, on établit alors un seuil S1 de puissance mesurée Pe" (S1 < S0), en-dessous duquel l'analyseur renvoie un signal de givrage.
- En présence d'eau sur le capteur 6, la puissance mesurée Pe" par l'interrogateur 8 est minimum, correspondant au bruit, puisque d'une part la désadaptation de l'antenne réceptrice 3 du TAG 6 est telle qu'elle ne reçoit plus la fréquence F0 de l'interrogateur 8, et d'autre part que l'antenne émettrice 5 du TAG 6 n'est plus adaptée pour émettre une fréquence à F1. En fonction du paramétrage préalable du dispositif 7, on établit alors un seuil S2 de puissance mesurée Pe" (S2 < S1 < S0), en-dessous duquel l'analyseur renvoie un signal de dégivrage.

En réalisant un suivi de la puissance reçue Pe" par l'interrogateur 8, il est donc possible de connaitre dans quelle situation se trouve le TAG 6. Un seuil de la puissance reçue Pe" est alors défini pour permettre de faire remonter des alertes à un système de contrôle de l'éolienne.

En outre, le capteur étant passif, le risque de foudroiement du dispositif est limité. En tout état de cause, la perte du TAG (perte du signal) n'entraîne pas de fausse alarme. La perte du signal correspond alors à la simple réception du bruit de l'environnement, ce qui est équivalent à la détection du capteur recouvert d'eau. Le procédé selon l'invention prévoit donc également la possibilité d'interroger de manière simultanée plusieurs TAG, disposés le long d'une pale, sans complexifier l'interprétation des résultats de mesure. Ceci permet de sécuriser la chaine de mesure en cas de perte d'un TAG, mais également de minimiser les opérations de remplacement.

Avantageusement, dans la bande de fréquence du TAG 6, de l'ordre de 20 MHz, on autorise une dérive en fréquence de l'interrogateur 8, sans pénaliser la détection. Le dispositif gagne ainsi en robustesse.

De plus, il est possible de faire fonctionner l'interrogateur par intermittence, afin de réduire l'impact électromagnétique du dispositif sur l'environnement, tout en économisant de l'énergie.

### REFERENCES CITEES

[1] M. Hirsch & al., Recent developments in miniaturized planar harmonic radar antennas, 30th AMTA Symposium, november, 2008
[2] Jordi Romeu Gómez, Design of a Chipless Harmonic Radar - Temperature Sensor, thesis of Institute for Microwave Engineering and Photonics, 2013

## Revendications

1. Dispositif (7) de détection de givrage et de dégivrage d'une pale d'éolienne **caractérisé en ce qu'**il comprend :
- d'une part un capteur (6), placé à la surface d'une pale, et comprenant :
∘ une première antenne (3), dite « réceptrice »,
∘ une seconde antenne (5), dite « émettrice »,
∘ un dispositif doubleur de fréquence (4), intercalé entre lesdites première et seconde antennes (3, 5), et
- d'autre part un interrogateur (8), configuré pour émettre une onde électromagnétique en direction de l'antenne réceptrice (3) dudit capteur (6), et recevoir une onde électromagnétique en provenance de l'antenne émettrice (5) dudit capteur (6),

2. Dispositif (7) selon la revendication 1, dans lequel l'interrogateur (8) comprend une antenne émettrice (9) et une antenne réceptrice (10).

3. Dispositif (7) selon la revendication 2, dans lequel les antennes (9, 10) de l'interrogateur (8) émettent et reçoivent des ondes polarisées.

4. Dispositif (7) selon la revendication 3, dans lequel les antennes (3, 5) du capteur (6) émettent et reçoivent des ondes polarisées, dont les polarisations correspondent aux polarisations respectives des antennes (9, 10) de l'interrogateur (8).

5. Dispositif (7) selon l'une des revendications précédentes, dans lequel l'interrogateur (8) comprend en outre un synthétiseur (11) alimentant une antenne émettrice (9) de l'interrogateur (8), et un récepteur (12) configuré pour analyser la puissance reçue (Pe") en provenance d'une antenne émettrice (5) du capteur (6).

6. Dispositif (7) selon l'une des revendications précédentes, dans lequel l'interrogateur (8) est alimenté en énergie électrique.

7. Dispositif (7) selon l'une des revendications précédentes dans lequel les antennes (3, 5) du capteur (6) sont des antennes patch.

8. Dispositif (7) selon l'une des revendications précédentes, dans lequel la fréquence de résonance de l'antenne réceptrice (3) du capteur (6), est voisine de 2,5 GHz.

9. Dispositif (7) selon l'une des revendications précédentes, dans lequel le doubleur de fréquence (4) comprend une jonction non linéaire jouant le rôle de doubleur, la jonction non linéaire étant de préférence une diode Schottky.

10. Dispositif (7) selon l'une quelconque des revendications précédentes, dans lequel le capteur (6) est composé d'un réseau d'antennes (3, 5) afin d'améliorer le rapport signal sur bruit au sein du dispositif (7).

11. Procédé mettant en oeuvre un dispositif (7) de détection de givrage et de dégivrage d'une pale d'éolienne selon l'une des revendications précédentes comprenant les étapes de :
- éclairer le capteur (6) à une fréquence fixe (F0), correspondant à la fréquence de résonance de l'antenne réceptrice (3) lorsque le capteur (6) est en contact avec de l'air,
- mesurer la puissance reçue (Pe"), en provenance de l'antenne émettrice (5) du capteur (6), à la fréquence (F1) égale à deux fois la fréquence d'éclairage (F0), et
- en fonction d'un seuil de puissance reçue (Pe"), faire remonter des alertes à un système de contrôle de l'éolienne.

12. Procédé selon la revendication 11 dans lequel le seuil de puissance reçue (Pe") comprend trois niveaux distincts (S0, S1, S2) qui dépendent du paramétrage préalable du dispositif (7).

13. Procédé selon la revendication 12 dans lequel si :
- Le niveau de puissance reçu (Pe") est compris entre S1 et S0 (S1 < S0), alors la pale n'étant pas considérée comme givrée, aucune alerte n'est remontée au système de contrôle de l'éolienne,
- Le niveau de puissance reçu (Pe") est compris entre S2 et S1 (S2 < S1), alors la pale étant considérée comme givrée, une alerte de givrage est remontée au système de contrôle de l'éolienne, et
- Le niveau de puissance reçu (Pe") est inférieur à S2, alors la pale étant considérée comme recouverte d'eau, une alerte de dégivrage est remontée au système de contrôle de l'éolienne.

14. Procédé selon l'une des revendications 11 à 13 dans lequel on interroge de manière simultanée plusieurs capteurs (6) disposés le long d'une pale.

## Patentansprüche

1. Vorrichtung (7) zur Erkennung von Vereisung und Enteisung eines Windradflügels, **dadurch gekennzeichnet, dass** sie umfasst:
- einerseits einen Sensor (6), der an der Oberfläche eines Flügels platziert ist und umfasst:
∘ eine erste, sogenannte "Empfangsantenne" (3),
∘ eine zweite, sogenannte "Sendeantenne" (5),
∘ eine Frequenzverdopplervorrichtung (4), die zwischen der ersten und der zweiten Antenne (3, 5) eingefügt ist, und
- andererseits einen Abfragesender (8), der so ausgestaltet ist, dass er eine elektromagnetische Welle in Richtung der Empfangsantenne (3) des Sensors (6) sendet und eine elektromagnetische Welle empfängt, die von der Sendeantenne (5) des Sensors (6) stammt.

2. Vorrichtung (7) nach Anspruch 1, wobei der Abfragesender (8) eine Sendeantenne (9) und eine Empfangsantenne (10) umfasst.

3. Vorrichtung (7) nach Anspruch 2, wobei die Antennen (9, 10) des Abfragesenders (8) polarisierte Wellen senden und empfangen.

4. Vorrichtung (7) nach Anspruch 3, wobei die Antennen (3, 5) des Sensors (6) polarisierte Wellen senden und empfangen, deren Polarisationen den entsprechenden Polarisationen der Antennen (9, 10) des Abfragesenders (8) entsprechen.

5. Vorrichtung (7) nach einem der vorhergehenden Ansprüche, wobei der Abfragesender (8) ferner einen Synthetisator (11), der eine Sendeantenne (9) des Abfragesenders (8) mit Strom versorgt, und einen Empfänger (12) umfasst, der so ausgestaltet ist, dass er die empfangene Leistung (Pe"), die von einer Sendeantenne (5) des Sensors (6) stammt, analysiert.

6. Vorrichtung (7) nach einem der vorhergehenden Ansprüche, wobei der Abfragesender (8) mit elektrischer Energie versorgt wird.

7. Vorrichtung (7) nach einem der vorhergehenden Ansprüche, wobei die Antennen (3, 5) des Sensors (6) Patchantennen sind.

8. Vorrichtung (7) nach einem der vorhergehenden Ansprüche, wobei die Resonanzfrequenz der Empfangsantenne (3) des Sensors (6) nahe 2,5 GHz ist.

9. Vorrichtung (7) nach einem der vorhergehenden Ansprüche, wobei der Frequenzverdoppler (4) einen nichtlinearen Übergang umfasst, der die Rolle des Verdopplers spielt, wobei der nichtlineare Übergang vorzugsweise eine Schottky-Diode ist.

10. Vorrichtung (7) nach einem der vorhergehenden Ansprüche, wobei der Sensor (6) aus einem Netz von Antennen (3, 5) besteht, um das Signal-Rausch-Verhältnis innerhalb der Vorrichtung (7) zu verbessern.

11. Verfahren, das eine Vorrichtung (7) zur Erkennung von Vereisung und Enteisung eines Windradflügels nach einem der vorhergehenden Ansprüche einsetzt, das die folgenden Schritte umfasst:
- Beleuchten des Sensors (6) bei einer festen Frequenz (F0), die der Resonanzfrequenz der Empfangsantenne (3) entspricht, wenn der Sensor (6) mit Luft in Kontakt ist,
- Messen der empfangenen Leistung (Pe"), die von der Sendeantenne (5) des Sensors (6) stammt, bei der Frequenz (F1), die gleich dem Zweifachen der Beleuchtungsfrequenz (F0) ist, und
- in Abhängigkeit von einem Schwellenwert der empfangenen Leistung (Pe"), Übertragen von Alarmen an ein Steuersystem des Windrads.

12. Verfahren nach Anspruch 11, wobei der Schwellenwert der empfangenen Leistung (Pe") drei unterschiedliche Niveaus (S0, S1, S2) umfasst, die von der vorherigen Parametrisierung der Vorrichtung (7) abhängen.

13. Verfahren nach Anspruch 12, wobei:
- wenn das Niveau der empfangenen Leistung (Pe") zwischen S1 und S0 (S1 < S0) beträgt, dann die Schaufel nicht als vereist betrachtet wird und kein Alarm an das Steuersystem des Windrads übertragen wird,
- wenn das Niveau der empfangenen Leistung (Pe") zwischen S2 und S1 (S2 < S1) beträgt, dann die Schaufel als vereist betrachtet wird und ein Vereisungsalarm an das Steuersystem des Windrads übertragen wird, und
- wenn das Niveau der empfangenen Leistung (Pe") niedriger als S2 ist, dann die Schaufel als mit Wasser bedeckt betrachtet wird und ein Enteisungsalarm an das Steuersystem des Windrads übertragen wird.

14. Verfahren nach einem der Ansprüche 11 bis 13, wobei mehrere Sensoren (6), die entlang eines Flügels angeordnet sind, auf simultane Weise abgefragt werden.

## Claims

1. A device (7) for detecting the icing and deicing of a wind turbine blade, **characterized in that** it comprises:
- on the one hand, a sensor (6) placed on the surface of a blade, and comprising:
∘ a first antenna (3), called "receiving antenna",
∘ a second antenna (5), called "emitting antenna",
∘ a frequency doubling device (4) interposed between said first and second antennas (3, 5), and
- on the other hand, an interrogator (8) configured to emit an electromagnetic wave towards the receiving antenna (3) of said sensor (6), and to receive an electromagnetic wave originating from the emitting antenna (5) of said sensor (6).

2. The device (7) according to claim 1, wherein the interrogator (8) comprises an emitting antenna (9) and a receiving antenna (10).

3. The device (7) according to claim 2, wherein the antennas (9, 10) of the interrogator (8) emit and receive polarized waves.

4. The device (7) according to claim 3, wherein the antennas (3, 5) of the sensor (6) emit and receive polarized waves, whose polarizations correspond to the respective polarizations of the antennas (9, 10) of the interrogator (8).

5. The device (7) according to any of the preceding claims, wherein the interrogator (8) further comprises a synthesizer (11) feeding an emitting antenna (9) of the interrogator (8), and a receiver (12) configured to analyze the received power (Pe") originating from an emitting antenna (5) of the sensor (6).

6. The device (7) according to any of the preceding claims, wherein the interrogator (8) is powered with electrical energy.

7. The device (7) according to any of the preceding claims, wherein the antennas (3, 5) of the sensor (6) are patch antennas.

8. The device (7) according to any of the preceding claims, wherein the resonance frequency of the receiving antenna (3) of the sensor (6), is close to 2.5 GHz.

9. The device (7) according to any of the preceding claims, wherein the frequency doubler (4) comprises a non-linear junction acting as a doubler, the non-linear junction being preferably a Schottky type diode.

10. The device (7) according to any one of the preceding claims, wherein the sensor (6) is composed of an array of antennas (3, 5) in order to improve the signal-to-noise ratio within the device (7).

11. A method implementing a device (7) for detecting the icing and deicing of a wind turbine blade according to any of the preceding claims comprising the steps of:
- illuminating the sensor (6) at a fixed frequency (F0), corresponding to the resonance frequency of the receiving antenna (3) when the sensor (6) is in contact with air,
- measuring the received power (Pe"), originating from the emitting antenna (5) of the sensor (6), at the frequency (F1) equal to twice the illumination frequency (F0), and
- based on a received power threshold (Pe"), sending back alerts to a wind turbine control system.

12. The method according to claim 11, wherein the received power threshold (Pe") comprises three distinct levels (S0, S1, S2) which depend on the prior parameterization of the device (7).

13. The method of claim 12, wherein if:
- The received power level (Pe") is comprised between S1 and S0 (S1 < S0), then the blade not being considered as iced, no alert is sent back to the wind turbine control system,
- The received power level (Pe") is comprised between S2 and S1 (S2 < S1), then the blade being considered as iced, an icing alert is sent back to the wind turbine control system, and
- The received power level (Pe") is lower than S2, then the blade being considered as covered with water, a de-icing alert is sent back to the wind turbine control system.

14. The method according to any of claims 11 to 13 wherein several sensors (6) disposed along a blade are simultaneously interrogated.
